# EUROPÄISCHE PATENTANMELDUNG

(11) **EP 1 477 510 A2**
(43) Veröffentlichungstag der Anmeldung: **17.11.2004**
(21) Anmeldenummer: 04101654.4
(22) Anmeldetag: 21.04.2004
(51) Int. Cl.: C08G 73/00, A61K 47/48

(54) **Ionische Komplexe und Verfahren zu ihrer Herstellung sowie Verfahren zur kontrollierten Abgabe von Wirkstoffen**

(30) Priorität: 06.05.2003 DE 10321165
(71) Anmelder: Institut für Polymerforschung Dresden e.V., 01069 Dresden (DE)
(72) Erfinder: Böhme, Frank, Dr., 01705, Freital (DE); Sharavanan, Karthikeyan, 641038, K.K. Pudur, Coimbatore (IN); Voit, Brigitte, 01187, Dresden (DE)
(74) Vertreter: Rauschenbach, Marion, Dipl.-Ing.

(57) **Zusammenfassung**

Die Erfindung bezieht sich auf das Gebiet der Chemie und betrifft ionische Komplexe, die beispielsweise für Medikamente zum Einsatz kommen können.

Die Aufgabe der Erfindung besteht in der Angabe von Komplexen, welche in wässriger Umgebung chemisch aktive Wirkstoffe kontrolliert über einen längeren Zeitraum freizusetzen.

Gelöst wird die Aufgabe durch einen ionischen Polymer-Wirkstoffkomplexe, der allgemeinen Struktur (1) 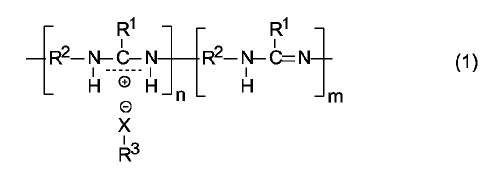 mit mindestens einer ionischen Bindung zwischen einer funktionellen Gruppe des Polymers und dem protonierten Wirkstoffbestandteil.

Die Aufgabe wird weiterhin durch ein Verfahren gelöst, bei dem aliphatische oder aliphatischaromatische Polyamidine mit protonendonatorgruppenenthaltenden Wirkstoffen in Kontakt gebracht werden.

Weiterhin wird die Aufgabe durch ein Verfahren gelöst, bei dem durch hydrolytische Spaltung der funktionellen Gruppen des Polymers die ionische Bindung aufgelöst und der Wirkstoff in seiner protonierten Form abgegeben wird.

## Beschreibung

Die Erfindung bezieht sich auf die Gebiete der Chemie, Medizin und Landwirtschaft und betrifft ionische Komplexe, die beispielsweise für Medikamente oder Düngemittel zum Einsatz kommen können und ein Verfahren zu ihrer Herstellung und zur kontrollierten Abgabe von Wirkstoffen.

Bekannt sind Medikamente, bei denen Wirkstoffe, wie z.B. Vitamin C, über einen längeren Zeitraum von einigen Stunden bis zu einem Tag an den Körper abgegeben werden.
Von Nachteil ist dabei, dass die Abgabe über die Zeit diskontinuierlich erfolgt, da nach kurzer Zeit bereits größere Mengen des Wirkstoffs freigesetzt und über die verbleibende Zeit eine ständig abnehmende Wirkstoffmenge freigesetzt wird.

Die Aufgabe der Erfindung besteht in der Angabe von Komplexen, welche in der Lage sind, in wässriger oder feuchter Umgebung chemisch oder biologisch aktive Wirkstoffe kontrolliert über einen längeren Zeitraum freizusetzen.

Die Aufgabe wird durch die in den Ansprüchen angegebene Erfindung gelöst. Vorteilhafte Ausgestaltungen sind Gegenstand der Unteransprüche.

Die erfindungsgemäßen ionischen Polymer-Wirkstoffkomplexe weisen die allgemeine Struktur (1) 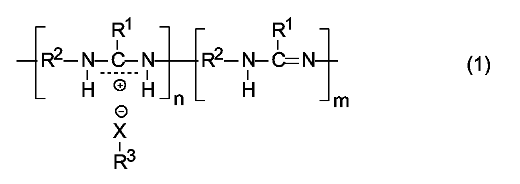 auf, wobei
- R¹: ein Proton, eine lineare oder verzweigte Alkylkette mit 1 bis 12 Kohlenstoffatomen oder ein aromatischer Ring,
- R²: eine lineare oder verzweigte Alkylkette mit 4 bis 16 Kohlenstoffatomen oder eine zyklische aliphatische Gruppe mit 6 bis 12 Kohlenstoffatomen, oder eine Oligomerkette bestehend aus 2 bis 15 Wiederholeinheiten der Struktur -CH₂-CH₂-O- oder -CH₂-CH(CH₃)-O- oder -CH₂-CH₂-CH₂-CH₂-O-,
oder die Struktureinheit (2) 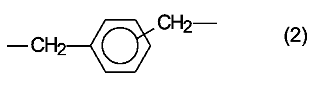
- n und m: ganze Zahlen von 1 bis 500,
- X: eine Phenolat-, Carboxylat- oder Sulfonatgruppe, -NH⁻, -S⁻ oder eine andere kationische Gruppe und
- R³: der Teil des Wirkstoffs, der zusammen mit dem protonierten X als HX-R³ freigesetzt wird und eine Struktureinheit mit 1 bis 80 Kohlenstoffatomen und gegebenenfalls weiteren Heteroatomen,
darstellt,
und mindestens eine ionische Bindung zwischen einer funktionellen Gruppe des Polymers und einem protonierten Wirkstoffbestandteil ausgebildet ist.

Vorteilhafterweise ist R¹ ein lineare Alkylkette mit 1 bis 4 Kohlenstoffatomen.

Weiterhin vorteilhafterweise ist R² Cyclohexan.

Bei dem erfindungsgemäßen Verfahren zur Herstellung von erfindungsgemäßen ionischen Polymer-Wirkstoffkomplexen werden aliphatische oder aliphatisch-aromatische Polyamidine mit protonendonatorgruppenenthaltenden Wirkstoffen in Kontakt gebracht.

Vorteilhafterweise wird das in Kontakt bringen der Polymere mit dem Wirkstoff durch Mischen in Schmelze durchgeführt.

Ebenfalls vorteilhafterweise wird das in Kontakt bringen der Polymere mit dem Wirkstoff durch Mischen in einem Lösungsmittel mit nachfolgendem Abdampfen des Lösungsmittels durchgeführt.

Es ist auch vorteilhaft, wenn das in Kontakt bringen der Polymere mit dem Wirkstoff durch Tauchen der Polymere in eine Lösung aus dem Wirkstoff durchgeführt wird.

Und auch vorteilhaft ist es, wenn die Herstellung der erfindungsgemäßen ionischen Polymer-Wirkstoffkomplexen durch Zugabe von Wirkstoffen während der Herstellung der aliphatischen oder aliphatisch-aromatischen Polyamidinen durchgeführt wird, wobei die Wirkstoffe gleichzeitig die Funktion des Katalysators übernehmen.

Bei dem erfindungsgemäßen Verfahren zur kontrollierten Abgabe von Wirkstoffen wird durch hydrolytische Spaltung der funktionellen Gruppen des Polymers gemäß Struktur (1) die ionische Bindung zwischen den funktionellen Gruppen und den Wirkstoffbestandteilen aufgelöst und der Wirkstoff in seiner protonierten Form kontrolliert an die Umgebung abgegeben.

Vorteilhafterweise wird die hydrolytische Spaltung durch eine kontrollierte Zugabe von Wasser zum Medium, in dem sich die Polymere mit Wirkstoffen befinden, gesteuert.

Weiterhin vorteilhafterweise wird die hydrolytische Spaltung über den pH-Wert gesteuert.

Mit der erfindungsgemäßen Lösung wird es möglich, eine kontrollierte, gezielte Freisetzung von Wirkstoffen, welche Protonendonatorgruppen enthalten, zu erreichen. Derartige Wirkstoffe können in erster Linie Medikamente sein, aber auch beispielsweise Lockstoffe, Farbstoffe, Signalstoffe, Katalysatoren, Düngemittel usw..

Die ionischen Polymer-Wirkstoffkomplexe stellen Mischungen basischer Polyamidine mit einem Wirkstoff dar, bei denen ein Proton des Wirkstoffs auf das Polyamidin übergegangen ist.

Die basischen Polymere weisen funktionelle Gruppen auf, die aufgrund ihrer Basizität die Protonen der Wirkstoffe anziehen und es damit zur Ausbildung einer ionischen Bindung zwischen den funktionellen Gruppen der Polymere und den protonierten Wirkstoffbestandteilen kommt. Dadurch werden die Wirkstoffe demobilisiert und an das basische Polymer gebunden. Ein unmittelbares Entweichen der Wirkstoffe beispielsweise durch Verdampfen oder Extraktion wird somit verhindert.

Aufgrund der homogenen Verteilung der funktionellen Gruppen im Polymer wird sichergestellt, dass auch der Wirkstoff homogen (molekular dispers) im Polymer verteilt ist. Die Ausbildung von Wirkstoffclustern, welche eine kontrollierte und gesteuerte Freigabe des Wirkstoffes erschweren könnte, wird vermieden. Außerdem wird durch die erfindungsgemäße Lösung die Anwendung von Wirkstoffen erleichtert, welche aufgrund ihrer schlechten Löslichkeit bisher nur schwer molekular freigesetzt werden konnten.

Durch hydrolytische Spaltung werden die funktionellen Gruppen des Polymers abgebaut wodurch die ionische Bindung zwischen dem Wirkstoff und dem Polymer aufgehoben wird. Dadurch erlangt der Wirkstoff seine Mobilität zurück und kann an die Umgebung abgegeben werden.
Die Geschwindigkeit der hydrolytischen Spaltung kann beispielsweise über den pH-Wert gesteuert werden, wodurch insbesondere die kontrollierte Freisetzung des Wirkstoffs langsam und über einen längeren Zeitraum erfolgen kann. In Abhängigkeit von den gewählten basischen Polymeren und den freizusetzenden Wirkstoffen und auch vom gesteuerten Vorliegen von Wasser kann die Freisetzung innerhalb von Minuten, vorteilhafterweise aber innerhalb von Stunden oder Tagen, Wochen oder Monaten realisiert werden.

Zur Bestimmung des Freisetzungsverhaltens der erfindungsgemäßen ionischen Komplexe wurde im allgemeinen folgende Methode verwendet: 5 mg des ionischen Polymer-Wirkstoffkomplexes werden in 1000 ml einer Pufferlösung gegeben. Die Pufferlösung wird bei 37 ± 1 °C mit 50 U/min gerührt. Von der Pufferlösung werden innerhalb von 60 h stündlich Proben (5 ml) genommen, welche hinsichtlich ihres Wirkstoffgehaltes mittels UV-Spektroskopie untersucht werden. Die gezogene Probenmenge wird mit frischer Pufferlösung aufgefüllt.
Die untersuchten ionischen Komplexe gaben in wäßriger Umgebung über einen Zeitraum von 10 Stunden 10 bis 80 %, in einem Zeitraum von 20 Stunden 20 bis 90 % und in einem Zeitraum von 30 Stunden 30 bis 100 % des Wirkstoffs kontinuierlich ab. In feuchter Umgebung kann die kontrollierte Wirkstoffabgabe über einen deutlich längeren Zeitraum erfolgen.

Die beim hydrolytischen Abbau frei werdenden Polymerbruchstücke sind aliphatische Amine oder deren Amide, welche in Hinblick auf ihre Umweltverträglichkeit und biologischen Verträglichkeit unbedenklich sind.

Zur Herstellung der ionischen Polymer-Wirkstoffkomplexe werden Polyamidine der allgemeinen Struktur (3) eingesetzt, 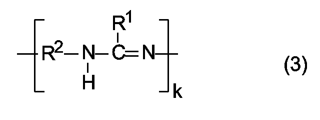 wobei
- R¹: ein Proton, eine linare oder verzweigte Alkylkette mit 1 bis 12 Kohlenstoffatomen oder ein aromatischer Ring, vorzugsweise ein lineare Alkylkette mit 1 bis 4 Kohlenstoffatomen,
- R²: eine lineare oder verzweigte Alkylkette mit 4 bis 16 Kohlenstoffatomen oder eine zyklische aliphatische Gruppe mit 6 bis 12 Kohlenstoffatomen, vorzugsweise Cyclohexan oder eine Oligomerkette bestehend aus 2 bis 15 Wiederholeinheiten der Struktur -CH₂-CH₂-O- oder -CH₂-CH(CH₃)-O- oder -CH₂-CH₂-CH₂-CH₂-O-, oder die Struktureinheit (2) und
- k: eine ganze Zahl von 3 bis 1000 ist.

Als Wirkstoffkomponente kommen grundsätzlich sämtliche Verbindungen in Frage welche mindestens eine Protonendonatorgruppe enthalten.
Bevorzugt sind Verbindungen der allgemeinen Struktur (4)

Y-R³ (4)

wobei
- y: eine Phenol-, Carbonsäure- oder Sulfonsäuregruppe, -NH₂, -SH oder eine andere Protonendonatorgruppe und
- R³: eine Struktureinheit mit 1 bis 80 Kohlenstoffatomen und gegebenenfalls weiteren Heteroatomen
ist.
Die Darstellung der Polyamidine der Struktur (3) erfolgt nach bekannten Verfahren (z. B. K. Sharavanan, H. Komber, F. Böhme: Synthesis and Properties of Aliphatic Polyacetamidines, *Macromol. Chem. Phys.,* 203, 1852-1858 (2002)) durch Umsetzung von Diaminen mit Orthoestern in Gegenwart eines sauren Katalysators.
Die Darstellung der erfindungsgemäßen ionischen Komplexe kann durch Mischen der Verbindungen (3) und (4) in der Schmelze erfolgen. Der Vorteil besteht darin, dass je nach Struktur die Schmelz- bzw. Erweichungstemperaturen einiger Polyamidine (3) deutlich unterhalb von 100 °C bis deutlich unterhalb von 50 °C liegen, wodurch eine thermische Schädigung des einzumischenden Wirkstoffs weitestgehend ausgeschlossen wird. Aus der Schmelze lassen sich die Komplexe in jede gewünschte Form bringen.

Eine weitere Möglichkeit der Darstellung der erfindungsgemäßen ionischen Komplexe besteht darin, die Komponenten in ein gemeinsames Lösungsmittel zu lösen, welches danach sorgfältig abgedampft wird. Mit Hilfe des Druckluft-Rotationsgießens (spin casting) lassen sich aus diesem Lösungsgemisch auch dünne Filme auf ein Substrat applizieren. In diesen, aus der Lösung gewonnenen erfindungsgemäßen ionischen Komplexen, ist der Wirkstoff besonders gut (molekular dispers) in der Polymermatrix verteilt.

Eine weitere Möglichkeit der Darstellung der erfindungsgemäßen ionischen Komplexe besteht darin, indem zunächst ein Film des Polyamidins aus der Lösung durch Druckluft-Rotationsgießen (spin casting) hergestellt wird, welcher nachfolgend durch Eintauchen in eine Lösung mit dem Wirkstoff in Kontakt gebracht wird. Auf der Oberfläche des Films bilden sich die erfindungsgemäßen ionischen Komplexe in denen der Wirkstoff demobilisiert ist.

Eine weitere Möglichkeit der Darstellung der erfindungsgemäßen ionischen Komplexe besteht darin, die Wirkstoffe bereits bei der Synthese der Polyamidine zuzusetzen. Das hat den Vorteil, dass die Wirkstoffe gleichzeitig als Katalysator dienen. Der Zusatz anderer saurer Katalysatoren entfällt damit.

Im weiteren wird die erfindungsgemäße Lösung an mehreren Ausführungsbeispielen näher erläutert.

### Beispiel 1

Eine Mischung aus 47,5 mmol 1,10-Diaminodecan, 50 mmol Triethylorthoacetat und 40 mmol Phenol werden bei 80 °C unter Stickstoff für 15 min gerührt. Danach wird die Temperatur innerhalb von 15 min auf 120 °C erhöht und für weitere 205 min gehalten. Der entstehende Alkohol wird kontinuierlich abgeführt. Danach wird der Druck auf 300 Pa reduziert und die Temperatur innerhalb von 45 min auf 180°C erhöht. Bei dieser Temperatur wird die Mischung weitere 135 min gehalten. Während dieser Zeit destilliert das Phenol vollständig ab. Das leicht gefärbte viskose Polymer wird unter Stickstoffstrom auf Zimmertemperatur abgekühlt.

3 g des entstandenen Polyamidins wird gemeinsam mit 2 g (S)-6-Methoxy-1-methyl-2-naphthalinessigsäure, einem bekannten Analgetikum, in Methanol aufgelöst. Danach wird das Lösungsmittel bei Zimmertemperatur vollständig abgedampft. Der entstehende in Filmform vorliegende ionische Polymer-Wirkstoff-Komplex wird unter Vakuum bei einem Druck von 100 Pa bei Raumtemperatur über 12 h getrocknet.

5 mg dieses Films werden in 1000 ml einer Pufferlösung mit einem pH-Wert von 7,0 ± 0,2 bei einer Temperatur von 37 ± 1 °C eingetaucht und mit 50 U/min gerührt. Von dieser Lösung werden über 60 h in reglären Intervallen 5 ml Proben gezogen, welche mittels UV-Vis-Spektroskopie untersucht wurden. Der Film wurde innerhalb dieser Zeit vollständig abgebaut. Folgende Freistetzungsmengen wurden ermittelt Anhand der UV-Absorption des Analgetikums kann eine kontrollierte Freisetzung über einen Zeitraum von 30 h nachgewiesen werden.: 20 % nach 5 h, 35 % nach 10 h, 70 % nach 20 h, 100 % nach 30 h.

### Beispiel 2

Eine Mischung aus 47,5 mmol 4-Aminomethylbenzylamine, 50 mmol Trimethylorthobutyrate und 40 mmol Phenol werden analog zu Beispiel 1 zur Reaktion gebracht.
3 g des entstehenden Polymers werden mit 1 g [2-(2,6-Dichloro-phenylamino)-phenyl]-essigsäure, einem bekannten Analgetikum; bei 150 °C in einem Doppelschneckenschmelzemischer mit 100 U/min innerhalb von 3 min gemischt. Das Freistetzungsverhalten des entstehenden ionischen Polymer-Wirkstoff Komplexes wurde, wie in Beispiel 1 beschrieben, ermittelt. Anhand der UV-Absorption des Wirkstoffes kann eine kontrollierte Freisetzung über einen Zeitraum von 50 h nachgewiesen werden. Folgende Freistetzungsmengen wurden ermittelt: 20 % nach 20 h, 35 % nach 40 h, 45 % nach 50 h.

### Beispiel 3

Eine Mischung aus 47,5 mmol 1,8-Diaminooctan, 50 mmol Triethylorthopropionat und 40 mmol Phenol werden werden analog zu Beispiel 1 zur Reaktion gebracht.
3 g des entstehenden Polymers werden mit 1 g 2-(3-Benzoyl-phenyl)-propionsäure bei 150 °C in einem Doppelschneckenschmelzemischer mit 100 U/min innerhalb von 3 min gemischt. Das Freistetzungsverhalten des entstandenen ionischen Polymer-Wirkstoff Komplexes wurde, wie in Beispiel 1 beschrieben, ermittelt. Anhand der UV-Absorption des Analgetikums kann eine kontrollierte Freisetzung über einen Zeitraum von 50 h nachgewiesen werden. Folgende Freistetzungsmengen wurden ermittelt: 20 % nach 5 h, 35 % nach 10 h, 70 % nach 20 h, 100 % nach 30 h

### Beispiel 4

Eine Mischung aus 47,5 mmol 1,10-Diaminodecan, 50 mmol Triethylorthoacetat und 40 mmol Salizylsäure werden bei 80 °C unter Stickstoff für 15 min gerührt. Danach wird die Temperatur innerhalb von 15 min auf 120 °C erhöht und für weitere 205 min gehalten. Der entstehende Alkohol wird kontinuierlich abgeführt. Danach wird der Druck auf 300 Pa reduziert und die Temperatur innerhalb von 45 min auf 140°C erhöht. Nach weiteren 30 min wird die leicht gefärbte viskose Schmelze unter Stickstoffstrom auf Zimmertemperatur abgekühlt. Ein Entweichen der Salizylsäure kann unter den gewählten Bedingungen nicht beobachtet werden. Es entsteht ein ionischer Polymer-Wirkstoffkomplex auf direktem Weg.
Das Freistetzungsverhalten des entstandenen ionischen Polymer-Wirkstoff Komplexes wurde, wie in Beispiel 1 beschrieben, ermittelt. Anhand der UV-Absorption des Wirkstoffes kann eine kontrollierte Freisetzung über einen Zeitraum von 50 h nachgewiesen werden. Folgende Freistetzungsmengen wurden ermittelt: 15 % nach 5 h, 35 % nach 10 h, 70 % nach 20 h, 100 % nach 30 h

## Patentansprüche

1. Ionische Polymer-Wirkstoffkomplexe, der allgemeinen Struktur (1) 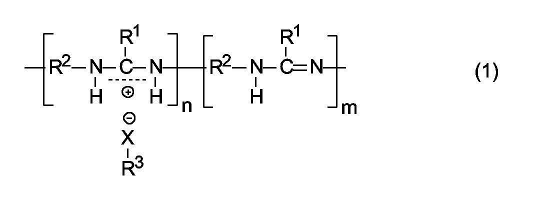 wobei
R¹ ein Proton, eine lineare oder verzweigte Alkylkette mit 1 bis 12 Kohlenstoffatomen oder ein aromatischer Ring,
R² eine lineare oder verzweigte Alkylkette mit 4 bis 16 Kohlenstoffatomen oder eine zyklische aliphatische Gruppe mit 6 bis 12 Kohlenstoffatomen, oder eine Oligomerkette bestehend aus 2 bis 15 Wiederholeinheiten der Struktur -CH₂-CH₂-O- oder -CH₂-CH(CH₃)-O- oder -CH₂-CH₂-CH₂-CH₂-O-, oder die Struktureinheit (2), 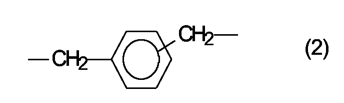
n und m ganze Zahlen von 1 bis 500,
X eine Phenolat-, Carboxylat- oder Sulfonatgruppe, -NH⁻, -S⁻ oder eine andere kationische Gruppe und
R³ der Teil des Wirkstoffs, der zusammen mit dem protonierten X als HX-R³ freigesetzt wird, und eine Struktureinheit mit 1 bis 80 Kohlenstoffatomen und gegebenenfalls weiteren Heteroatomen,
darstellt,
und mindestens eine ionische Bindung zwischen einer funktionellen Gruppe des Polymers und dem protonierten Wirkstoffbestandteil ausgebildet ist.

2. Ionische Polymer-Wirkstoffkomplexe nach Anspruch 1, bei denen R¹ ein lineare Alkylkette mit 1 bis 4 Kohlenstoffatomen ist.

3. Ionische Polymer-Wirkstoffkomplexe nach Anspruch 1, bei denen R² Cyclohexan ist.

4. Verfahren zur Herstellung von ionischen Polymer-Wirkstoffkomplexen nach mindestens einem der Ansprüche 1 bis 3, bei dem aliphatische oder aliphatisch-aromatische Polyamidine mit protonendonatorgruppenenthaltenden Wirkstoffen in Kontakt gebracht werden.

5. Verfahren nach Anspruch 4, bei dem das in Kontakt bringen der Polymere mit dem Wirkstoff durch Mischen in Schmelze durchgeführt wird.

6. Verfahren nach Anspruch 4, bei dem das in Kontakt bringen der Polymere mit dem Wirkstoff durch Mischen in einem Lösungsmittel mit nachfolgendem Abdampfen des Lösungsmittels durchgeführt wird.

7. Verfahren nach Anspruch 4, bei dem das in Kontakt bringen der Polymere mit dem Wirkstoff durch Tauchen der Polymere in eine Lösung aus dem Wirkstoffes durchgeführt wird.

8. Verfahren nach Anspruch 4, bei dem die Herstellung des ionischen Polymer-Wirkstoffkomplexes durch Zugabe von Wirkstoffen während der Herstellung von aliphatischen oder aliphatisch-aromatischen Polyamidinen durchgeführt wird, wobei die Wirkstoffe gleichzeitig die Funktion des Katalysators übernehmen.

9. Verfahren zur kontrollierten Abgabe von Wirkstoffen aus ionischen Polymer-Wirkstoffkomplexen nach mindestens einem der Ansprüche 1 bis 3, bei dem durch hydrolytische Spaltung der funktionellen Gruppen des Polymers gemäß Struktur (1) die ionische Bindung zwischen den funktionellen Gruppen und den Wirkstoffbestandteilen aufgelöst und der Wirkstoff in seiner protonierten Form kontrolliert an die Umgebung abgegeben wird.

10. Verfahren nach Anspruch 9, bei dem die hydrolytische Spaltung durch eine kontrollierte Zugabe von Wasser zum Medium, in dem sich die Polymere mit Wirkstoffen befinden, gesteuert wird.

11. Verfahren nach Anspruch 9, bei dem die hydrolytische Spaltung über den pH-Wert gesteuert wird.
